# EUROPEAN PATENT APPLICATION

(11) **EP 2 180 229 A1**
(43) Date of publication of application: **28.04.2010**
(21) Application number: 08253405.8
(22) Date of filing: 21.10.2008
(51) Int. Cl.: F16L 59/02, F16L 59/14

(54) **Pipe insulating assembly**

(71) Applicant: Rockwool International A/S, 2640 Hedehusene (DK)
(72) Inventor: The designation of the inventor has not yet been filed
(74) Representative: Samuels, Lucy Alice

(57) **Abstract**

A pipe insulating assembly for heat insulating at least two substantially parallel pipes (1, 2), which assembly comprises an outer insulating element (11) commonly surrounding the pipes (1, 2). The assembly also comprises an inner insulating element (10) arranged between the pipes (1, 2) and being surrounded by said outer insulating element (11). The inner insulating element (10) has better heat insulating properties than the outer heat insulating element. A method for insulating at least two substantially parallel pipes (1, 2) comprising outer and inner insulating elements is also disclosed.

## Description

The invention relates to a pipe insulating assembly for heat insulating at least two substantially parallel pipes according to the introduction of claim 1. The invention also relates to a method of heat insulating at least two substantially parallel pipes according to claim 13.

Products for heat insulating two or more pipes are already known. For instance, DE 201 11 685 A1 shows a pipe section made of polyurethane foam for receiving two parallel pipes. In a first embodiment the pipe section is made as a single unit comprising an elongate body provided with two parallel cylinder-shaped cavities and provided with two slits leading from the outside of the pipe section to each of the two cavities, respectively. In another embodiment the pipe section is made of two pipe sections that are interconnected to form a single unit. In order to exclude any heat exchange between the two pipes they must be separated a certain minimum distance provided with a sufficient amount of heat insulating material between the two pipes.

DE 10 2004 062 601 A1 shows another pipe section made of mineral wool, such as stone wool or glass wool, that is adapted to be mounted on two parallel pipes. This pipe section is provided with cylinder-shaped cavities having diameters that correspond to the diameters of the pipes that are to be heat insulated. In the embodiments shown the two pipes are arranged relatively close to one another, and since there is only little insulating material, if any at all, in the area between the two pipes heat exchange inevitably will take place between the two pipes. This might be acceptable in some applications, but in most applications it is not acceptable.

In general there is a requirement of separate heat insulation of parallel pipes so that no heat exchange takes place between the two pipes. On the other hand it is also a wish that parallel pipes should be arranged close to each other in order not to take up too much space. It is an object of the present invention to provide a pipe insulating assembly that allows good heat insulation of pipes that are arranged quite close to one another.

This object is achieved by arranging the pipe insulating assembly as provided in the characterising part of claim 1 and by using the method of claim 13.

By using two different insulating materials in the assembly in the described manner it is possible within economically acceptable limits to arrange two or more pipes closer to each other than hitherto and still avoid heat exchange between the pipes. This is possible since a major part of the insulating material, namely the outer insulating material surrounding the pipes, can be of any conventional type, and only the small amount of insulating material arranged between the pipes need to have very good insulating properties.

The invention allows a relatively close arrangement of the pipes in new buildings, but it is also suitable for refurbishment, where existing pipes needs better thermal insulation. In that case the existing insulation is removed, and a new insulating assembly in accordance with the invention is mounted between and around the pipes.

Preferably, the outer insulating material is mineral wool, such as glass wool, stone wool or slag wool. These kinds of insulating material are conventional in the art of heat insulating pipes and other kind or industrial equipment and are often in the form of flexible products that can be wrapped around pipes or other equipment.

Generally, mineral wool is made by fiberising a mineral melt, either by internal centrifuging (typical for glass wool) or by external centrifuging (typical for stone and slag wool). A binder is normally applied to ensure coherence of the fibres in the mineral wool such that a coherent product is obtained. The binder may be organic or inorganic depending on the final use of the product. Other substance may also be applied, e.g. oil for reducing dusting and/or for making the product water repellent. The mineral wool is collected from the spinning apparatus as a mineral wool web that is led to a curing oven for curing the binder. Before the mineral wool web reaches the curing oven it might be subjected to length and/or height compression and/or pleating and/or any other treatment for reorganising the fibres, so that the final product achieves specific properties with regards to density, rigidity, compression and tension strength, etc. One or both surfaces of the product may be provided with a foil, e.g. an aluminium foil, or with a wire mesh. The final product can be a flexible mat intended for wrapping around equipment to be insulated or it can be a relatively rigid plate.

In one embodiment the inner insulating material is an organic foam, such as polyurethane foam or extruded polystyrene (XPS) or expanded polystyrene (EPS). Organic foam is well-known for heat insulating and generally foam has heat insulating properties that are superior of those of mineral wool. The use of foam is acceptable if there is no issue about fire resistance or high temperature pipes, where foam products normally will fail.

In another embodiment the inner insulating material contains an aerogel which in this specification it is meant to cover different kinds of dried gel products, commonly known as aerogels, xerogels and cryogels. These products are known to have excellent insulating properties, owing to their very high surface areas, high porosity and relatively large pore volume. They are manufactured by gelling a flowable sol-gel solution and then removing the liquid from the gel in a manner that does not destroy the pores of the gel.

Depending on the drying conditions aerogels, xerogels or cryogels can be made. Where the wet gel is dried at above the critical point of the liquid, there is no capillary pressure and therefore relatively little shrinkage as the liquid is removed. The product of such a process is very highly porous and is known as an aerogel. On the other hand, if the gel is dried by evaporation under subcritical conditions, the resulting product is a xerogel. Although shrinkage is unhindered in the production of a xerogel, the material usually retains a very high porosity and a large surface area in combination with a very small pore size. When the gel is dried in a freeze-drying process, a cryogel is obtained.

Usually the aerogel is based on a silica-containing sol-gel solution, but suitable aerogels may also be based on alumina or other metal oxides suitable for the sol-gel technique. It there is no fire resistance issue or high temperatures involved the aerogel may also be made from organic precursors, such as resorcinol-formaldehyde, melamine-formaldehyde, polyimides, polyurethanes, polyisocyanurates and various unsaturated hydrocarbon materials.

The aerogel may be used in its pure form, but since pure aerogel products (including xerogel and cryogel products) are fragile and susceptible to cracking they are difficult to handle. Therefore, in one embodiment the aerogel is included as particles in a fibre matrix comprising organic and/or inorganic fibres. By the term "aerogel particles" is meant particles that are either monolithic or particles comprising smaller monolithic particles that are joined by a suitable binder and/or compressed to form a larger particle. The average diameter of the particle will normally be below 1 cm and above 2 mm, preferably above 5 mm.

In another embodiment the inner insulating element comprises organic and/or inorganic fibres included in an aerogel matrix, where the fibres serve to reinforce the material. These materials are known as aerogel matrix composites and are commonly produced in the form of mats, which are typically manufactured by impregnating the reinforcing fibres with a flowable sol-gel solution, gelling and then removing the liquid from the gel in a manner that does not destroy the pores of the gel. Aerogel matrix composites are mechanically strong, good insulators and require a shorter processing time than pure aerogel.

In a preferred embodiment the fibres used in connection with the aerogel are mineral fibres, preferably stone fibres, which provide good fire properties to the product. Preferably the inner insulating material comprises at least 40 wt.% aerogel, more preferably at least 60 wt.%, even more preferably at least 80 wt.%, such as up to 90 wt.% or even up to 98 wt.%.

In order to avoid air spaces where air can circulate between the inner insulating element and the pipes the inner insulating element is provided with abutment surfaces that are shaped for tightly abutting the pipes.

The inner insulating element may comprise at least two parts that each has an abutment surface that is shaped for tightly abutting a pipe. This embodiment is particularly relevant if the pipes to be insulated have different diameters, since it is then possible to select sub-elements for the inner insulating elements that fits pipes with different diameters.

In a preferred embodiment the outer insulating element is in the form of a flexible mat that is wrapped around the pipes and the inner insulating element. The flexible mat can be cut to the correct size at the building site, which makes this embodiment of the pipe insulating assembly very flexible. If the mat is made of mineral wool it preferably has a density above 20 kg/m³ or even above 30 kg/m³, such as above 40 kg/m³ or even above 50 kg/m³. The density for a flexible mat will normally be below 120 kg/m³ or even below 90 kg/m³, such as below 70 kg/m³, or even below 60 kg/m³.

Alternatively, the outer insulating element is relatively rigid and pre-shaped to fit closely around the pipes and the inner insulating element. By this embodiment it is possible to ensure a tight fit and possibly a better appearance of the finished assembly, but the system is not as flexible as the one described with a flexible mat. If the pre-shaped outer insulating element is made of mineral wool it preferably has a density above 50 kg/m³ or even above 60 kg/m³, such as above 70 kg/m³ or even above 80 kg/m³. The density for a flexible mat will normally be below 180 kg/m³ or even below 150 kg/m³, such as below 120 kg/m³, or even below 100 kg/m³.

In the case of a pre-shaped outer insulating element it can advantageously be divided into two parts that are assembled to surround said pipes and said inner insulating element. Thereby the outer insulating element can be made relatively rigid without any risk of breakage when it is fitted around the pipes and the inner insulating element.

In accordance with the invention the method for insulating at least two substantially parallel pipes comprises the following steps:
- arranging an inner insulating element between the pipes, which inner insulating element comprising an inner insulating material,
- arranging an outer insulating element around the pipes and the inner insulating element, which outer insulating element comprises an outer insulating material,
wherein the inner insulating material has better heat insulating properties than the outer heat insulating material.

In the method according to the invention the outer insulating element and the inner insulating element may be provided with the features mentioned above.

The invention will be described in the following by way of example with reference to the drawings in which
Figure 1 shows conventional pipe insulating with individual insulation of each pipe;
Figure 2 shows a first embodiment of a pipe insulating assembly according to the invention;
Figure 3 shows a second embodiment of a pipe insulating assembly according to the invention; and
Figure 4 shows a third embodiment of a pipe insulating assembly according to the invention.

Many buildings comprise pipes for transferring heating or cooling media. In order to save energy such heating or cooling pipes must be heat insulated so that heat exchange only takes place where it is desired and not in e.g. pipe shafts leading from the heating/cooling installation to the rooms where heating/cooling is needed.

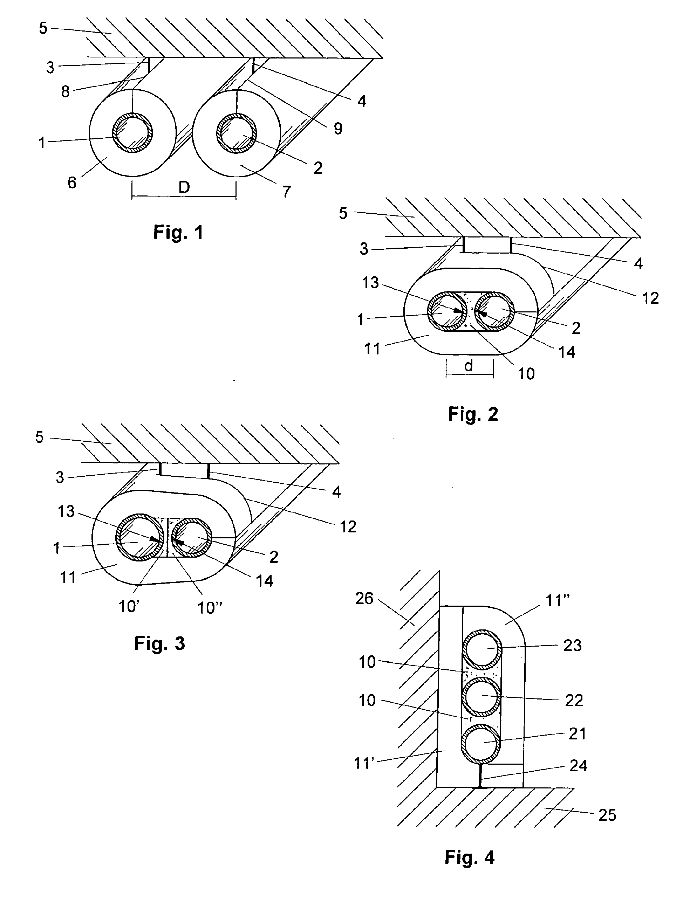

Conventionally, pipes 1, 2 are mounted by means of pipe hangers or bearings 3, 4 to e.g. a ceiling 5 as shown in Figure 1. After mounting to the ceiling 5 the pipes 1, 2 are heat insulated individually by means of separate pipe sections 6, 7 provided with a slit 8, 9 so they can be opened and wrapped around the pipes 1, 2. In order to be able to wrap the pipe sections 6, 7 around the pipes 1, 2 they must be separated a certain minimum distance D, which after mounting of the pipe sections 6, 7 leaves an empty space around and between the pipe sections 6,7.

By means of the pipe insulating assembly according to the present invention it is possible to arrange the pipes 1, 2 closer to each other than seen in the prior art hitherto without any substantial heat exchange taking place between the pipes 1, 2. Figure 2 shows that this is possible by arranging an inner insulating element 10 in the space between the pipes 1, 2, and subsequently wrapping the pipes 1, 2 and the inner insulating element 10 with a common outer insulating element 11. The outer insulating element 11 is preferably made of a conventional insulating material, such as mineral wool or foam, whereas the inner insulating element 10 is made of an inner insulating material that has better heat insulating properties than the outer insulating material. The inner insulating element 10 may also be made of e.g. foam as long as it has better insulating properties than the outer insulating element 11. Preferably, however, the inner insulating element 10 comprises aerogel which has excellent insulating properties in relation to conventional mineral wool and foam insulation. The aerogel may be in its pure form or it may be included as particles in a fibre matrix comprising organic and/or inorganic fibres or in the form of organic and/or inorganic fibres included in an aerogel matrix, where the fibres serve to reinforce the material. By using two materials having different heat insulating properties it is possible in an economical feasible manner to arrange the pipes 1, 2 very close, whereby the pipe assembly as a whole only occupies little space. In general the distance between the pipes 1, 2 can be reduced from the conventional distance D shown in Figure 1 to the small distance d shown in Figure 2.

The economical feasibility resides in that only the relatively small space between the pipes 1, 2 needs to be filled with an expensive, high insulating material, whereas the larger part of the insulation - the outer insulating element 11 surrounding the pipes 1, 2 and the inner insulating element 10 - can be made of a less expensive conventional heat insulating material.

In a preferred embodiment the outer insulating element 11 is made of mineral wool, such as glass wool, stone wool or slag wool. It may be semi-rigid like conventional pipe sections of mineral wool, but preferably it is made as a flexible mat that is cut to size and subsequently wrapped around the pipes 1, 2 and the inner insulating element 10. The abutting ends of the mat can be interconnected by any means, such as by a binding wire or adhesive tape (not shown). In order to receive the pipe bearings 3, 4 (see Figure 2) a slit 12 is cut in the mat before it is wrapped around the pipes 1, 2.

The inner insulating element 10 arranged between the pipes 1, 2 is preferably relatively rigid and pre-shaped with abutment surfaces 13, 14 for abutting tightly on the pipes 1, 2.

If the pipes 1, 2 have different diameters as shown in Figure 3 the inner insulating element may comprise two halves 10', 10" that each has an abutment surface 13, 14 pre-shaped to fit each diameter. It is particularly suitable to use a flexible mat as the outer insulating element 11 when the pipes 1, 2 have different diameters, since it can easily be cut to the correct size and then wrapped closely around the pipes 1, 2 and the inner insulating elements 10', 10".

Figure 4 shows a third embodiment of the invention. In this embodiment three pipes 21, 22, 23 are arranged above each other. Only the lowermost pipe 21 is supported by a pipe bearing 24 mounted on the floor 25. The other two pipes 22, 23 are each supported by an inner insulating element 10 that rests on top of the pipe 21, 22 beneath it.

The outer insulating element consists of two halves 11', 11", where one 11' is arranged in the corner between the floor 25 and a wall 26, and the other 11" is arranged on the outside of the pipes 21, 22, 23 and the two inner insulating elements 10. In this embodiment the inner insulating elements 10 must be sufficiently rigid and have sufficient compression strength to support a pipe resting on top of it in a stable manner. The inner insulating element preferably has a compressive stress at 10% compression, or if the maximum compressive stress is reached before 10% compression, a compressive strength of above 2 kPa or even above 5 kPa, such as above 10 kPa or even above 20 kPa. It will normally be below 120 kPa or even below 100 kPa, such as below 80 kPa, or even below 60 kPa. According to the present invention, the compressive stress at 10% compression or, if the maximum compressive stress is reached before 10% compression, the compressive strength is tested according to European Standard EN 826:1996.

It should be noted that the examples described above and shown in the drawings are to be considered as nothing else than non-restrictive examples of the invention. Thus, other embodiments than those described and shown are possible within the scope given by the appended claims.

## Claims

1. A pipe insulating assembly for heat insulating at least two substantially parallel pipes (1, 2), which assembly comprises an outer insulating element (11) made of an outer insulating material having heat insulating properties, said outer insulating element (11) commonly surrounding said at least two pipes (1, 2),
**characterized in that** said assembly also comprises an inner insulating element (10) arranged between said at least two pipes (1, 2) and being surrounded by said outer insulating element (11), said inner insulating element (10) comprising an inner insulating material having better heat insulating properties than said outer heat insulating material.

2. A pipe insulating assembly according to claim 1, **characterised in that** said outer insulating material is mineral wool, such as glass wool, stone wool or slag wool.

3. A pipe insulating assembly according to claim 1 or 2, **characterised in that** said inner insulating material is an organic foam, such as polyurethane foam or extruded polystyrene (XPS) or expanded polystyrene (EPS).

4. A pipe insulating assembly according to claim 1 or 2, **characterised in that** said inner insulating material contains an aerogel.

5. A pipe insulating assembly according to claim 4, **characterised in that** said aerogel is included as particles in a fibre matrix comprising organic and/or inorganic fibres.

6. A pipe insulating assembly according to claim 4, **characterised in that** said inner insulating material comprises organic and/or inorganic fibres included in an aerogel matrix.

7. A pipe insulating assembly according to claim 5or 6, **characterised in that** said inorganic fibres are mineral fibres, preferably stone fibres.

8. A pipe insulating assembly according to any one of claims 1-7, **characterised in that** said inner insulating element (10) is provided with abutment surfaces (13, 14) that are shaped for tightly abutting the pipes (1, 2).

9. A pipe insulating assembly according to any one of claims 1-8, **characterised in that** said inner insulating element (10) comprises at least two parts (10', 10") that each has an abutment surface (13, 14) that is shaped for tightly abutting a pipe (1, 2).

10. A pipe insulating assembly according to any one of claims 1-9,
**characterised in that** said outer insulating element (11) is in the form of flexible mat that is wrapped around said pipes (1, 2) and said inner insulating element (10).

11. A pipe insulating assembly according to any one of claims 1-9,
**characterised in that** said outer insulating element (11) is pre-shaped to fit closely around said pipes (1, 2) and said inner insulating element (10).

12. A pipe insulating assembly according to claim 11, **characterised in that** said outer insulating element (11) is divided into two parts (11', 11") that are assembled to surround said pipes (1, 2) and said inner insulating element (10).

13. Method for insulating at least two substantially parallel pipes (1, 2) comprising the following steps:
- arranging an inner insulating element (10) between said pipes (1, 2), said inner insulating element (10) comprising an inner insulating material,
- arranging an outer insulating element (11) around said pipes (1, 2) and said inner insulating element (10), said outer insulating element (11) comprising an outer insulating material,
wherein said inner insulating material has better heat insulating properties than said outer heat insulating material.

14. Method according to claim 13, wherein the outer insulating element (11) and the inner insulating element (10) are provided with the features mentioned in any one of claims 1-12.
